**Europäisches Patentamt**

**European Patent Office**

**Office européen des brevets**

(19)

(11) Veröffentlichungsnummer: **0 240 848 B1**

(12) # EUROPÄISCHE PATENTSCHRIFT

(45) Veröffentlichungstag der Patentschrift:
09.01.91 Patentblatt 91/02

(51) Int. Cl.⁵: **B01F 5/06, F28C 3/06**

(21) Anmeldenummer: **87104419.4**

(22) Anmeldetag: **25.03.87**

(54) Vorrichtung für den Wärme- und/oder Stoffaustausch.

(30) Priorität: **07.04.86 US 849002**

(43) Veröffentlichungstag der Anmeldung:
**14.10.87 Patentblatt 87/42**

(45) Bekanntmachung des Hinweises auf die
Patenterteilung:
**09.01.91 Patentblatt 91/02**

(84) Benannte Vertragsstaaten:
**CH DE FR GB IT LI NL**

(56) Entgegenhaltungen:
DE-A- 2 414 319
DE-A- 2 447 369
DE-C- 2 722 424

(73) Patentinhaber: **GEBRÜDER SULZER
AKTIENGESELLSCHAFT**
Zürcherstrasse 9
CH-8401 Winterthur (CH)

(72) Erfinder: **Grosz-Roell, Friedrich**
Berninastrasse 89
CH-8057 Zürich (CH)
Erfinder: **Mutsakis, Michael**
235 84th Street
Brooklyn New York 11209 (US)
Erfinder: **Rader, Robert G.**
519 N. Cardington
Wichita Kansas 67212 (US)

(74) Vertreter: **Sparing Röhl Henseler
Patentanwälte European Patent Attorneys**
Rethelstrasse 123
D-4000 Düsseldorf 1 (DE)

EP 0 240 848 B1

## Beschreibung

Die Erfindung betrifft eine Vorrichtung für den Wärme- und/oder Stoffaustausch zwischen einem flüssigen und einem gas-bzw. dampfförmigen Medium, wobei das Volumen des Gases bzw. des Dampfes ein Vielfaches des Flüssigkeitsvolumens ist, mit einem Mantelrohr, in dem ein statischer Mischer angeordnet ist, der aus einer geordneten Struktur aus Lagen besteht, welche aus Leitflächen gebildet ist, derart, dass gegen die Mantelrohrachse geneigte Strömungskanäle entstehen, wobei die Strömungskanäle von benachbarten Lagen sich kreuzen, wobei das flüssige Medium in axialer Richtung zugeführt ist und das dampfförmige Medium in den Innenraum des Mantelrohres eingeleitet ist.

Mit dem Ausdruck "statische Mischer" bezeichnete Vorrichtungen sind beispielsweise aus den schweizerischen Patentschriften 537 208, 547 120, 642 564, der EP-PS-70 917, den US-Patentschriften 3 923 288, 4 034 965, 3 286 992 und 3 664 638 bekannt.

Eine derartige Vorrichtung für Wärmeaustausch ist z.B. aus der CH-C- 617 357 bekannt.

Die vorliegende Erfindung betrifft die Anwendung von statischen Mischern für den direkten Austausch, insbesondere Wärmeaustausch zwischen mindestens zwei Medien.

Zur Erhitzung einer Flüssigkeit, insbesondere Wasser, ist es bekannt, in die Flüssigkeit heissen Dampf, insbesondere Wasserdampf einzuleiten.

Bei hierfür bekannten Vorrichtungen sind ausser einem geringen Wirkungsgrad und konstruktiv aufwendigen Apparaturen, auftretende Dampf/Flüssigkeitsschläge nicht vermeidbar. Ausserdem sind keine hohen Volumenverhältnisse bezüglich Dampf/Flüssigkeit beherrschbar.

Der Erfindung liegt die Aufgabe zugrunde, den Austausch, insbesondere die direkte Wärmeübertragung von Dampf auf eine Flüssigkeit, insbesondere auch bei grossen Gas- bzw. Dampfvolumen im Verhältnis zu den Flüssigkeitsvolumen, d.h. grösser als 2 :1 zu verbessern, sowie Gas bzw. Dampf/Flüssigkeitsschläge zu vermeiden.

Diese Aufgabe wird gemäss der Erfindung dadurch gelöst, dass am Umfang des von einem Ringraum umgebenen Mantelrohres im Bereich des statischen Mischers mindestens eine Eintrittsöffnung für die Zuführung des dampfförmigen Mediums angeordnet ist.

Vorteilhaft können bei Anwendung eines statischen Mischers mit einer geordneten Struktur von Lagen die Eintrittsöffnungen im Bereich von benachbarten Lagen des statischen Mischers angeordnet sein.

Unter Umständen kann es vorteilhaft sein, in Serie zu dem Austauscher noch mindestens einen statischen Mischer anzuordnen.

Bei einem Wärmeaustauscher wird im Betrieb der heisse Dampf von einem Ringkanal aus in feinen Strahlen durch relativ kleine Oeffnungen im Mantelrohr des Wärmeaustauschers zwischen benachbarten Lagen eines jeden Packungs- körpers eingeleitet. Die entstehenden Dampfblasen werden in sich kreuzenden Strömungskanälen ausgebreitet. Sie dispergieren in kleine Dampfbläschen und kondensieren in der zu erwärmenden Flüssigkeit. Wegen der radialen Transporteigenschaften der statischen Mischer wird kaltes Wasser von der Rohrmitte an die Wand geführt und das erwärmte Wasser wieder in die Rohrmitte zurückgeführt. Hierdurch ist auch immer eine homogene Temperatur des Wassers gewährleistet. Einen zusätzlichen Vorteil bildet die lastunabhängige Arbeitsweise dieser Lösung sowohl bezüglich Flüssigkeit und/oder Dampf. Evtl. noch verbleibende Dampfbläschen können in einem nachgeschalteten statischen Mischer der gleichen Bauart dispergiert und sodann kondensiert werden.

Durch die rasche Dispersion des Dampfes in kleine Blasen werden die sonst auftretenden Dampf/Flüssigkeitsschläge verhindert. Ausserdem arbeitet die erfindungsgemässe Vorrichtung mit einem hohen thermischen Wirkungsgrad, ebenfalls infolge der rasch erfolgenden Dispergierung.

Neben dem Erwärmen einer Flüssigkeit durch Kondensation des eigenen Dampfes kann dieses konstruktive Konzept auch allgemein beim Gas/Flüssigkeits-Kontaktieren eingesetzt werden, wenn grosse Gas- zu Flüssigkeits-Volumenströme vorliegen, wie z.B. beim Lösen von gasförmigen in flüssigen Kohlenwasserstoffen, beim Erwärmen von Schmelzkäse mittels Dampf oder zur Deodorisation von Kakaobutter mit Dampf.

Die Erfindung wird im folgenden anhand eines in der Zeichnung schematisch dargestellten Ausführungsbeispiels erläutert :

Fig. 1 zeigt einen Wärmeaustauscher in einem Seitenschnitt und die

Fig. 2 und 3 Querschnitte gemäss den Schnittlinien II-II und III-III in Fig. 1.

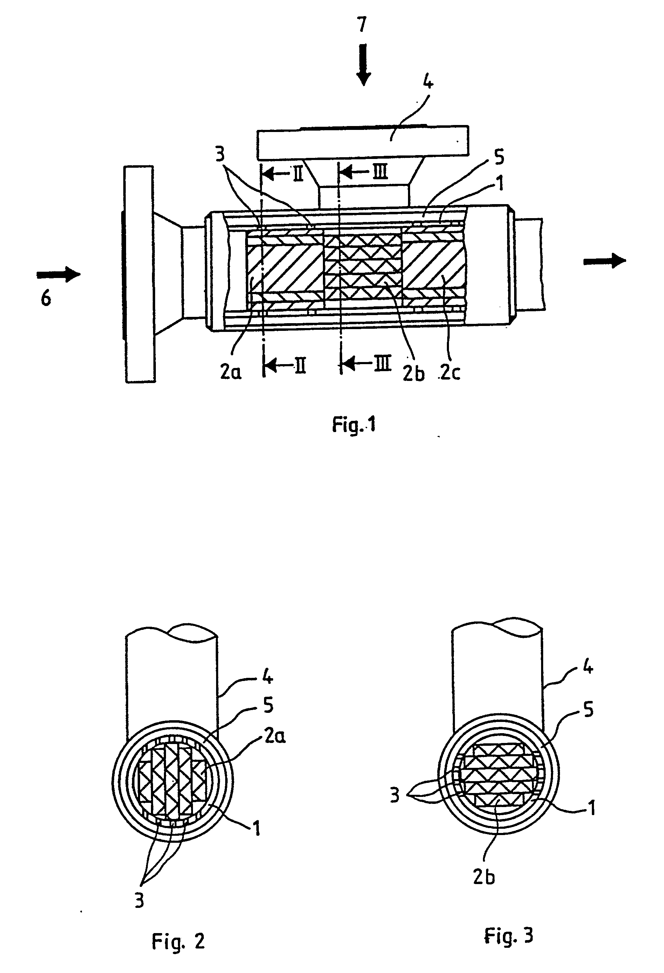

In einem Mantelrohr 1 sind drei Packungskörper 2a, 2b und 2c jeweils um 90° gegeneinander versetzt angeordnet. In dem Mantelrohr 1 sind in gegenüberliegenden Bereichen jeweils zwischen 2 benachbarten Lagen der Packungskörper Durchtrittsöffnungen 3 für den Dampf angeordnet (vergl. auch Fig. 2 und 3, wobei in Fig. 3 eine andere Ausführung für die Anordnung der Oeffnungen gezeigt ist). Der Dampf 7 wird durch einen Stutzen 4 und einen Ringraum 5 durch die Oeffnungen 3 in feinen Strahlen in die Packungskörper eingeleitet.

Die zu erwärmende Flüssigkeit 6 wird in axialer Richtung (siehe Pfeil) in das Mantelrohr 1 eingeleitet und verlässt dieses nach Erwärmung ebenfalls in axialer Richtung (siehe Pfeil).

In der Zuführleitung des Dampfes kann ein Regelventil angeordnet sein, welches von der Temperatur des Produktes derart gesteuert wird, dass stets die gewünschte Ausgangstemperatur erreicht wird.

Weiterhin kann es vorteilhaft sein, eine Teilmenge des erwärmten Produktes in die Zuführleitung der Flüssigkeit zurückzuführen, um das Gas/Flüssigkeitsverhältnis variieren zu können.

Die Erfindung umfasst auch nicht lösliche Systeme, z.B. das Aufwärmen von flüssigem Oel durch Direktkondensation von Wasserdampf. In diesem Fall wird anschliessend an die Wärmeübertragung ein Trennapparat für die Oel/Wasser-Dispersion angeordnet.

## Ansprüche

1. Vorrichtung für den Wärme- und/oder Stoffaustausch zwischen einem flüssigen und einem gas- bzw. dampfförmigen Medium, wobei das Volumen des Gases bzw. des Dampfes ein Vielfaches des Flüssigkeitsvolumens ist, mit einem Mantelrohr (1), zum Führen des flüssigen Mediums in axialer Richtung, in dem ein statischer Mischer (2a b, c) angeordnet ist, der aus einer geordneten Struktur aus Lagen besteht, welche aus Leitflächen derart gebildet ist, daß gegen die Mantelrohrachse geneigte Strömungskanäle entstehen, wobei sich die Strömungskanäle von benachbarten Lagen kreuzen, und wobei das dampfförmige Medium (7) in den Innenraum des Mantelrohres (1) einleitbar ist, dadurch gekennzeichnet, daß am Umfang des von einem Ringraum (5) umgebenen Mantelrohres (1) im Bereich des statischen Mischers (2a, b, c) mindestens eine Eintrittsöffnung (3) für die Zuführung des gas- bzw. dampfförmigen Mediums (7) angeordnet ist.

2. Vorrichtung nach Anspruch 1 mit einem aus einer geordneten Struktur von Lagen bestehenden statischen Mischers (2a, b, c), dadurch gekennzeichnet, daß die Eintrittsöffnungen (3) im Bereich von benachbarten Lagen des statischen Mischers (2a, b, c) angeordnet sind.

3. Vorrichtung nach Anspruch 1, dadurch gekennzeichnet, daß in Achsrichtung des Mantelrohres (1) mehrere Reihen von Öffnungen (3) hintereinander angeordnet sind.

4. Vorrichtung nach einem der Ansprüche 1 bis 3, dadurch gekenzeichnet, daß dem Austauscher noch mindestens ein statischer Mischer nachgeschaltet ist.

## Claims

1. A device for heat exchange and/or mass transfer between a liquid and a gaseous or vapour medium, the volume of gas or vapour being many times the volume of liquid, the device comprising a tubular casing (1) for conveying the liquid medium in the axial direction and containing a static mixer (2a, b, c) comprising an ordered structure of layers in the form of a baffle surfaces so as to produce flow ducts at an angle to the axis of the tubular casing, the flow ducts in adjacent layers crossing one another, and the medium (7) in vapour form being introduced into the interior of the tubular casing (1), characterised in that at least one inlet opening (3) for introducing the gaseous or vapour medium (7) is formed in the region of the static mixer (2a, b, c) at the periphery of the tubular casing (1), which is surrounded by an annular space (5).

2. A device according to claim 1, comprising a static mixer (2a, b, c) made up of an ordered structure of layers, characterised in that the inlet openings (3) are disposed near adjacent layers of the static mixer (2a, b, c).

3. A device according to claim 1, characterised in that a number of rows of openings (3) are disposed one behind the other in the axial direction of the tubular casing (1).

4. A device according to any of claims 1 to 3, characterised in that at least one static mixer is disposed downstream of the exchanger.

## Revendications

1. Dispositif d'échange de chaleur et/ou de transfert de matière entre un liquide et un fluide gazeux ou sous forme de vapeur, dans lequel le volume du gaz ou de la vapeur représente un multiple du volume de liquide, comportant un tube-enveloppe (1), faisant circuler le liquide en direction axiale, dans lequel est disposé un mélangeur statique (2a, b, c) qui est constitué d'une structure ordonnée de couches formée de surfaces conductrices de manière à créer des canaux d'écoulement inclinés vers l'axe du tube-enveloppe, les canaux d'écoulement de couches voisines se croisant et le fluide (7) sous forme de vapeur pouvant être introduit dans l'espace intérieur du tube-enveloppe (1), caractérisé en ce qu'au moins un orifice d'entrée (3), servant à l'amenée du fluide (7) sous forme de gaz ou de vapeur, est disposé à la périphérie du tube-enveloppe (1), entouré d'un espace annulaire (5), dans la zone du mélangeur statique (2a, b, c).

2. Dispositif suivant la revendication 1, comportant un mélangeur statique (2a, b, c) constitué d'une structure ordonnée de couches, caractérisé en ce que les orifices d'entrée (3) sont disposés dans la zone de couches voisines du mélangeur statique (2a, b, c).

3. Dispositif suivant la revendication 1, caractérisé en ce que plusieurs rangées d'orifices (3) sont disposées les unes derrière les autres dans la direction de l'axe du tube-enveloppe (1).

4. Dispositif suivant les revendications 1 à 3, caractérisé en ce qu'il comporte encore au moins un mélangeur statique en série avec l'échangeur.

Fig. 1

Fig. 2

Fig. 3